# EUROPEAN PATENT SPECIFICATION

(11) **EP 4 006 880 B1**
(45) Date of publication and mention of the grant of the patent: **04.03.2026**
(21) Application number: 19938560.0
(22) Date of filing: 14.11.2019
(51) Int. Cl.: G09B 23/18

(54) **METHOD FOR SIMULATING AN ELECTRICAL CIRCUIT, SYSTEM FOR THE IMPLEMENTATION THEREOF, AND SIMULATING COMPONENT**
VERFAHREN ZUR SIMULATION EINES ELEKTRISCHEN SCHALTKREISES, SYSTEM ZU DESSEN DURCHFÜHRUNG UND SIMULATIONSKOMPONENTE
PROCÉDÉ DE SIMULATION DE SCHÉMA ÉLECTRIQUE, SYSTÈME DE MISE EN OEUVRE ET COMPOSANT DE SIMULATION

(30) Priority: 25.07.2019 RU 2019123419
(43) Date of publication of application: 01.06.2022
(73) Proprietor: Davydov, Denis Aleksandrovich, Sverdlovskaya obl., g. Ekaterinburg, 620028 (RU)
(72) Inventor: Davydov, Denis Aleksandrovich, Sverdlovskaya obl., g. Ekaterinburg, 620028 (RU)
(74) Representative: Kuhnen & Wacker Patent- und Rechtsanwaltsbüro PartG mbB
(86) International application number: PCT/RU2019/000813
(87) International publication number: WO 2021/015639

(56) References cited:
- EP-B1- 1 348 209
- RU-U1- 181 254
- RU-U1- 186 799
- US-A1- 2002 107 679
- WU TE-YEN TEYANWU@GMAIL COM ET AL: "CircuitSense Automatic Sensing of Physical Circuits and Generation of Virtual Circuits to Support Software Tools", PROCEEDINGS OF THE 2017 ACM ON CONFERENCE ON INFORMATION AND KNOWLEDGE MANAGEMENT, ACMPUB27, NEW YORK, NY, USA, 20 October 2017 (2017-10-20), pages 311 - 319, XP058541925, ISBN: 978-1-4503-5586-5, DOI: 10.1145/3126594.3126634
- KIM YOONJI AKAI BIJOU@GMAIL COM ET AL: "VirtualComponent A Mixed-Reality Tool for Designing and Tuning Breadboarded Circuits", HUMAN FACTORS IN COMPUTING SYSTEMS, ACM, 2 PENN PLAZA, SUITE 701NEW YORKNY10121-0701USA, 2 May 2019 (2019-05-02), pages 1 - 13, XP058572941, ISBN: 978-1-4503-5971-9, DOI: 10.1145/3290605.3300407
- WU TE-YEN TEYANWU@GMAIL COM ET AL: "CurrentViz Sensing and Visualizing Electric Current Flows of Breadboarded Circuits", PROCEEDINGS OF THE 2017 ACM ON CONFERENCE ON INFORMATION AND KNOWLEDGE MANAGEMENT, ACMPUB27, NEW YORK, NY, USA, 20 October 2017 (2017-10-20), pages 343 - 349, XP058541919, ISBN: 978-1-4503-5586-5, DOI: 10.1145/3126594.3126646

## Description

### PERTINENT ART

This invention relates to electric circuit simulation means, namely, an electrical circuit simulation technique, its implementation system and simulating component, and may be used in educational activities as a training aid, playing construction kit, breadboard, or test bench for teaching circuit engineering.

### PRIOR ART

To assist in teaching circuit engineering and electric circuit simulation, various training kits comprising a support plane with working area arranged thereon and electrical units installed on such working area and equipped with real devices which are common electrical circuit elements have been developed. For example, such kits are disclosed in the patent for invention FR2412128 (IPC G09B23/18, publication date 22/8/1980) and patent application GB2259177 (IPC G09B1/08, publication date 3/3/1993). Both known similar technical solutions use a magnetic support substrate that allows for arranging electrical units with a magnetic fixation means in random order. Such substrate may also be ruled as a rectangular grid in order to enable positioning electrical units in specific cells. Electrical units can be interconnected with the help of electrical wire segments. By using conducting materials in electrical units, current flows in the assembled circuit when the latter is connected to a power supply. The use of magnets as a means of fixing the elements on the substrate prevents their unintentional displacement and allows for fixing the support substrate with the units installed thereon on any inclined surface.

A similar principle is implemented in an electronic construction kit disclosed in the Russian patent for utility model RU186799 (IPC A63H 33/04, publication date: 4/2/2019). The known solution uses discrete radio-electronic elements, which are designed for assembling an electrical circuit on a working area. The solutions used in the known construction kit ensure compatibility with microprocessor boards, primarily Arduino, and with other training kits.

In other way, an assembly of the electrical circuit from terminating and conductive components is proposed in the Russian patent for useful model RU174016 (publication date: 25/9/2017, corresponding patent is published as EP3363514, publication date 22/8/2018). The known device comprises a power supply source consisting of a substrate with mounting pins on its upper side and mounting holes on its lower side, and a housing with an integrated processor and USB connector. The aforementioned pins and holes on the substrate and the USB connector are electrically connected to the processor. The device is placed on a breadboard provided with mounting pins to secure the power supply source and conductive and terminating components to it. These components also have locating pins and holes so that they can be connected to the pins and holes in the substrate to form electrical contact. The USB connector is designed to transmit and write a work program edited on an external electronic device, such as a personal computer, to the processor.

In yet another example known from patent for invention EP 1348209 (IPC G09B23/185, publication date 1/10/2003), a breadboard for educational purposes is disclosed, which helps assemble electrical circuits consisting of electronic modular components. The breadboard consists of a housing, an assembling panel with a set of interleaved bonding pads which form a rectangular grid on this panel. The bonding pads include five terminal leads each that define possible spatial position of the modular component connected with them in four possible directions.

Patent application US2002/107679 (IPC G06F3/011, publication date 8/8/2002) discloses a technique of creating virtual models of 2D and 3D objects assembled from modular components mounted on a supporting board. The supporting board is provided with a set of contacts, each of which has a given position on the board corresponding to them. The known technique contemplates constructing a virtual model that reflects the layout of the modular components mounted on the supporting board based on the data about the location of these components on the board, data for identification of the components and data about their properties obtained by computations with the values of current and voltage on the contacts connected with the modular components.

There are also known Edison Kit and Tesla Kit training kits by LightUp, Inc. (available at: https://www.lightup.io/app, accessed on: July 2019). The kit contains real electrical components that are connected by magnets for assembling an electrical circuit. When the user points the tablet camera at the assembled electrical circuit, special software enables visualization of the currents flowing inside the circuit and verification of the correct assembly. The components included in these kits are not linked with or controlled by a computing complex. The need to keep the tablet camera on the table and constantly point it at the assembled circuit causes inconvenience and risk of damage to the tablet.

It is also known that when teaching circuit engineering and programming with the use of microcontrollers, e.g. Arduino, solderless breadboards are used to assemble electrical circuits from real conductive electrical components such as LEDs, buttons, capacitors and the like. This approach allows for configuring simple electrical circuits to turn LEDs on and off, connect temperature and humidity sensors and LDRs, and operate such components, for example, change LED brightness through the use of Arduino software environment (Sources: Nussey J. Arduino for dummies. - John Wiley & Sons, 2013; Petin, V. A. Projects with Arduino controller. 2 ed. - BKhV-Peterburg, 2015).

However, technical solutions known in the prior art are characterized by a number of deficiencies, including, in the first instance, the need to use expensive or damageable devices, such as fast supercapacitors or diodes. Other deficiencies are the lack of possibility to integrate the assembled electrical circuit with a computer, which would enable automatic verification of the correct assembly and prompting in case of incorrect assembly. Some known technical solutions designed for simulation of real objects are limited in their field of application, as in the case of application US2002/107679. This solution is not adapted for performing simulation specifically of electrical circuits assembled from simulating components and makes it impossible to return to a user the data on the state of the assembled electrical circuit, for example the currents and potentials in different points of such circuit. These deficiencies of the known technical solutions generally limit their functionalities required for conducting effective simulation of the electrical circuit for educational purposes with the use of components that simulate real electrical devices and elements of electrical circuits.

WU TE-YEN TEYANWU@GMAIL COM ET AL: "CircuitSense Automatic Sensing of Physical Circuits and Generation of Virtual Circuits to Support Software Tools", PROCEEDINGS OF THE 2017 ACM ON CONFERENCE ON INFORMATION AND KNOWLEDGE MANAGEMENT, ACMPUB27, NEW YORK, NY, USA, 20 October 2017 (2017-10-20), pages 311-319, XP058541925, DOI: 10.1145/3126594.3126634 ISBN: 978-1-4503-5586-5 discloses the following Abstract: "The rise of Maker communities and open-source electronic prototyping platforms have made electronic circuit projects increasingly popular around the world. Although there are software tools that support the debugging and sharing of circuits, they require users to manually create the virtual circuits in software, which can be time-consuming and error-prone. We present *CircuitSense,* a system that automatically recognizes the wires and electronic components placed on breadboards. It uses a combination of passive sensing and active probing to detect and generate the corresponding circuit representation in software in real-time. *CircuitSense* bridges the gap between the physical and virtual representations of circuits. It enables users to interactively construct and experiment with physical circuits while gaining the benefits of using software tools. It also dramatically simplifies the sharing of circuit designs with online communities."

### DISCLOSURE OF INVENTION

The invention is defined by the appended claims.

The technical problem this invention is aimed to solve consists in creating an effective and easy-to-use educational technical tool designed for electrical circuit simulation.

The technical result achieved in the implementation of this invention is to extend the functionality of the electrical circuit simulation implementation.

In accordance with the first aspect of the invention, an electrical circuit simulation technique is claimed which is designed to be performed by a computing complex electrically coupled to at least one simulating component, wherein the technique includes:
a. Providing at least one electromagnetic coupling between at least two simulating components, of which at least one is electrically coupled to the computing complex;
b. Establishing correlation between each electromagnetically coupled simulating component and a simulated electrical circuit element;
c. Computer simulation of the simulated electrical circuit that consists of the electrical elements that correspond to coupled simulating components and is arranged in such a way that each electromagnetic coupling between simulating components has a corresponding electrical coupling between the electrical circuit elements simulated by them;
d. Reproducing the results of computer simulation of the simulated circuit to the user.

In accordance with the second aspect of this invention, an electrical circuit simulation system is claimed for the implementation of the claimed technique, consisting of a computing complex, power supply source and simulating components of the first kind electrically interconnected between each other, with each simulating component of the first kind represented by a section of a dielectric plate common for all such components with at least one electromagnetic interaction unit and at least one means of fixation located on such section, wherein electromagnetic interaction units and means of fixation of each simulating component of the first kind are located on the common dielectric plate forming a rectangular grid, and each electromagnetic interaction unit enables an electromagnetic coupling with a simulating component other than the simulating component of which such unit is a part.
In accordance with the third aspect of the invention, a simulating component of the second kind is claimed, which enables the interaction with the claimed electrical circuit simulation system and comprise a functional unit coupled to at least one electromagnetic interaction unit and a means of fixation.

While studying scientific and technical, as well as patent literature, no combination of features identical to the combination of essential features set forth in the claims of this invention was found.

### BRIEF DESCRIPTION OF DRAWINGS

FIG. 1A to 1C show block diagrams of the electrical circuit simulation technique.
FIG. 2 shows an embodiment of a proper electrical circuit of the electrical circuit simulation system.
FIG. 3 shows an embodiment of the device used in the electrical circuit simulation system.
FIG. 4 shows a layout of the electromagnetic interaction units in the proper electrical circuit of the electrical circuit simulation system.
FIG. 5A to 5B show an example of conducting an electrical circuit simulation using training software for this invention embodiment.

### DESCRIPTION OF EMBODIMENTS OF INVENTION

The following detailed description of this invention with reference to the accompanying drawings is provided to illustrate it more clearly. However, it will be clear to persons skilled in the art that the inventive conception of this invention according to the appended claims is not limited to these particular details.

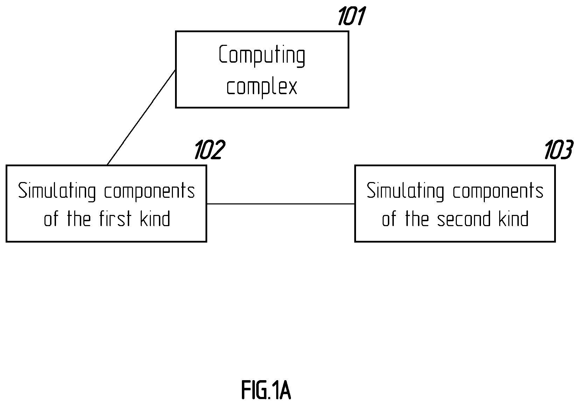

**FIG. 1A** shows a block diagram of the electrical circuit simulation technique in relation to the hardware and software of the claimed electrical circuit simulation technique. Hardware and software are incorporated in a computing complex **101** based on a microcontroller connected to a personal computer.

Another means for implementing the claimed technique are simulating components, which may be represented by simulating components of the first kind **102** or simulation components of the second kind **103.** Simulating components **102-103** are designed to simulate real elements used to assemble electrical circuits, which are interconnected by means of electrical coupling that allows electrical current to flow. Such elements will be hereinafter referred to as "simulated elements" **104.** Examples of simulated elements **104** may include transistors, diodes, connecting wires, and sensors. Moreover, parts of simulating components may include electric-light, electric-acoustic, electric-mechanical or other devices. All simulating components of the first kind 102 are electrically coupled to the computing complex via series-connected switches and analog-to-digital converters, and are located on a single dielectric plate common to all of the simulating components of the first kind 102. Simulating components of the first kind 102 are electrically connected to the power supply poles via switches. Simulating components of the second kind 103 are represented by devices designed to be placed on a dielectric plate and coupled to the simulating components of the first kind 102 to assemble the required electrical circuit and perform its simulation.

Simulating components of the first kind 102 are sections of a single dielectric plate with other parts of such components placed on both sides of the plate, which include an electromagnetic interaction unit linked with the computing complex that enables electromagnetic coupling with at least one of the other simulating components. Simulating component 102 of the first kind may optionally include an image of the simulated element placed on the section of the dielectric plate. For example, such image may imply a schematic indication of the polarity of the power supply pole. Moreover, simulating component 103 of the second kind may also comprise a schematic representation of the element simulated by it, e.g. a diode or a resistor, in accordance with the rules adopted in the field of electronic engineering for reference symbols of electrical elements in electrical circuits.

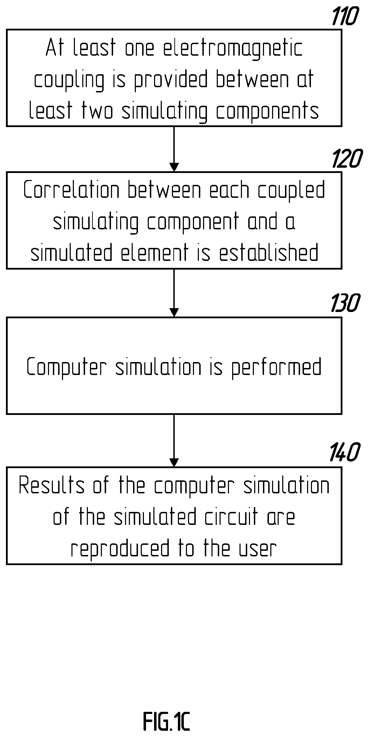

FIG. 1C shows a block diagram of the sequence of operations in the claimed electrical circuit simulation technique. In step 110, at least one electromagnetic coupling is established between at least two simulating components, of which at least one is electrically coupled to the computing complex. In one example, electromagnetic coupling may be established between two simulating components of the first kind 102, by means of an electrical wire. In another example, electromagnetic coupling may be established between simulating component of the first kind 102 and simulating component of the second kind 103: a diode, component of the second kind 103, may be coupled to a conductor, component of the first kind 102, or to two components, one of which is "conductor" and the other is "power supply pole". Hereinafter, the bracketed name of the electrical component is used to mean "example of simulated component 104", e.g. "diode" is a simulated diode. Simulating components 103 of the second kind are selected so as to enable the user to assemble an arbitrary electrical circuit to conduct its simulation. At the same time, multiple simulating components may be simultaneously used to assemble a single simulated electrical circuit, as needed.

Simulating component of the first kind **102** and simulating component of the second kind **103** include electromagnetic interaction units through which coupling between these components is established. Simulating component of the first kind **102** includes an electromagnetic interaction unit coupled to computing complex **101** that enables electromagnetic coupling with at least one of the other simulating components. The electromagnetic coupling allows for data exchange between simulating components of the first kind **102,** second kind **103** and computing complex **101,** as well as providing electric power supply to simulating components of the second kind **103** from the power supply source via simulating components of the first kind **102.** Each electromagnetic interaction unit may be part of one, two or more simulating components of the first kind **102.** In this case, for computer simulation purposes, the electromagnetic coupling to such unit is interpreted as electromagnetic coupling to at least one of a variety of simulating components of which such unit is a part.

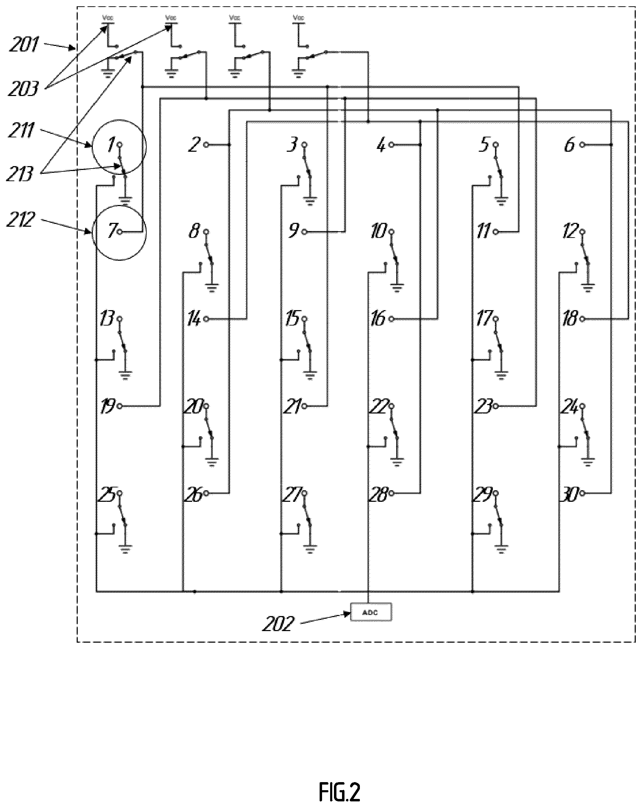

In one embodiment, each electromagnetic interaction unit is configured so as to enable contact interaction with the simulating component. In such case, the electromagnetic interaction unit may be represented by a terminal lead on the dielectric plate. **FIG. 2** shows proper wiring diagram **201** of the electrical circuit simulation system, where terminal leads are numbered by positions **1 to 30.** Such terminal lead ensures an electrical contact with terminal leads of the simulating component of the second kind **103** in case of contact between terminal lead surfaces, whereby the component is powered and analog or digital signals are exchanged with the computing module via analog-to-digital converter **202.** Therein, to enable the electrical coupling, it is sufficient to ensure that simulating component of the second kind **103** contacts two terminal leads of simulating component of the first kind **102,** which are connected to the opposite poles of the power supply source.

In another preferred embodiment, each electromagnetic interaction unit is designed so as to provide contactless interaction between simulating components of the first kind **102** and second kind **103.** In such case, the electromagnetic interaction unit is represented by a PCB or wire induction coil. For example, the PCB coil may be presented as a conductive spiral track on the dielectric plate. When current flows through the PCB coil, electromagnetic field is induced, which enables power to be supplied to simulating component of the second kind **103** and signals to be exchanged with it. To enable electromagnetic coupling, it is sufficient to ensure interaction between one said coil placed on the dielectric plate and one coil placed on simulating component **103.** It will be apparent to a person skilled in the art that various specific embodiments of electromagnetic coupling are possible in the present invention, for example providing electromagnetic interaction by means of the RFID (Radio Frequency Identification), wherein simulating component of the second kind **103** may have a transponder (RFID tag). In such embodiment, electromagnetic interaction units of simulating component of the first kind **102** on the dielectric plate section may be represented by reading machines.

However, there may be embodiments in which some of the electromagnetic interaction units are designed for contact interaction with the simulating components and some of such units are designed for contactless interaction. For example, simulating component of the second kind **103,** when placed on the dielectric plate, may be simultaneously coupled to two electromagnetic interaction units designed for contact interaction for receiving power supply and to one electromagnetic interaction unit designed for contactless interaction for exchanging data with the computing module **101.**

The electromagnetic interaction units of simulating components of the first kind **102** may be preferably placed on the dielectric plate to form a rectangular grid, with said units being placed at the intersections of vertical and horizontal lines of such grid similar to widely used solderless breadboards in which terminal leads are placed in parallel rows. This provides visual convenience when configuring electrical circuits from simulating components of the second kind **103,** particularly for users who are skilled in assembling electrical circuits on breadboards. It is worth noting, however, that in various embodiments of the technique it is not necessary to strictly respect the rectangular shape of the grid. In particular, such grid may be made diamond-shaped or parallelogram-shaped, or in any other intuitively and visually perceptible form that makes it possible to conveniently arrange simulating components of the second kind **102** on the dielectric plate surface.

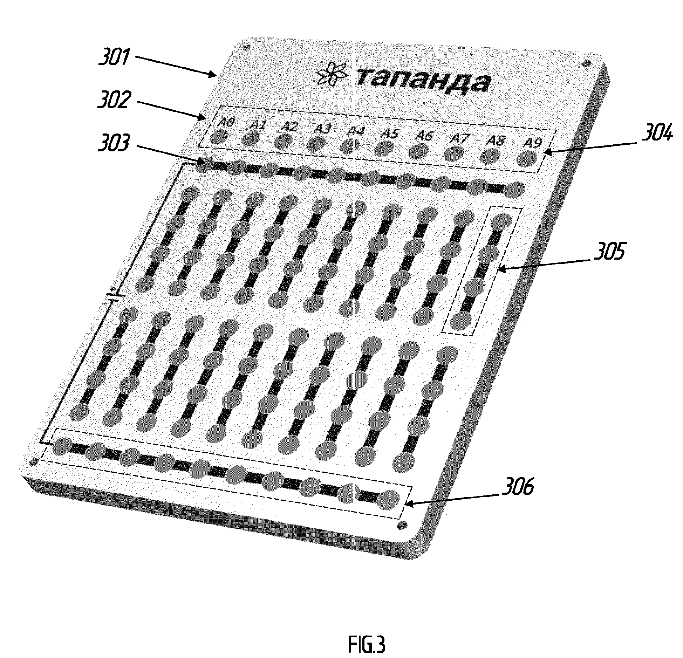

The principle of arranging the electromagnetic interaction units can also be more precisely understood in accordance with **FIG. 3****,** that shows in detail front part **302** of device **301** used in the claimed electrical circuit simulation technique and the system for the technique implementation. Front part **302** covers the dielectric plate located in the housing of this device **301,** but at the same time makes bonding pads **303** placed on the dielectric plate that form the said rectangular grid accessible to the user. Each bonding pad **303** consists of an electromagnetic interaction unit and a means of fixation for simulating component of the second kind **103.** One preferred means of fixation is a magnet. However, it will be understood by persons skilled in the art that the means of fixation may also be implemented as an alternative embodiment, such as in the form of pins and mating holes that ensure securing the simulating components of the second kind **103** to the bonding pad **303.** **FIG. 3** shows as well the examples of simulating components of the first kind: simulated microcontroller outputs **304,** simulated conductor **305** and simulated power supply pole **306.** One simulating component of the second kind 103 may be preferably coupled to one or two electromagnetic interaction units to provide it with electrical power and enable the exchange of analog or digital signals. However, in various embodiments, electromagnetic coupling of a single simulating component to an arbitrary number of electromagnetic coupling units may be established.

Each electromagnetic interaction unit is characterized by its affiliation with at least one simulating component and state indicating the presence or absence of electromagnetic coupling of such unit to another simulating component. The dielectric plate may comprise an analog, digital or analog and digital circuit by means of which the state of all units of each simulating component of the first kind **102** is transmitted to computing complex **101.** The affiliation of the interaction unit indicates which of the interacting simulating components it is a part of. If the simulating component is component of the first kind **102,** the affiliation data also includes a reference number of the electromagnetic interaction unit, which may be selected from a range of values **1-30** on the rectangular grid, as illustrated in **FIG. 2****.** The data on the unit state and affiliation may be digitally transmitted to the computing module, thereby providing a chart of coupled simulating components of the first kind **102** and second kind **103.** This may be most preferable in the case where the electromagnetic interaction unit is configured so as to enable contactless interaction with the simulating component, and the simulating component is represented by a digital component provided with a microcontroller, which storage device keeps all its data in digital form.

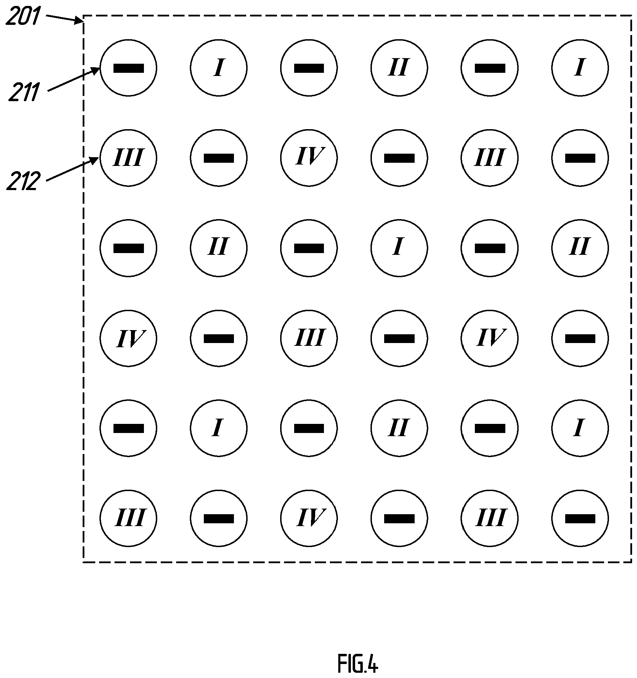

However, such chart may also be obtained in another way. For this purpose, the electromagnetic interaction units preferably represented by terminal leads on the dielectric plate may have a different execution, namely be represented by interaction units of the first type **211** and second type **212.** Simulating components of the first kind **102** may have such dimensions and mutual arrangement that the electrical interaction units of first and second types appear to be staggered on the dielectric plate. The layout of the terminal leads is illustrated by the drawing shown in **FIG. 4****,** where reference positions **I** to **IV** indicate electrical circuit channels **201** on which interaction units of the second type **212** are arranged. The terms "vertical" and "horizontal" as used in the description text and when stating the invention features in the claims of the present invention are to be understood as characterizing possible positions of the simulating component on the rectangular grid on the dielectric plate plane. For example, a vertical position of a simulating component on a rectangular grid is its position when interacting with a pair of adjacent terminal leads, that have reference numbers: **7** (extreme right contact in the second row of the rectangular grid) and **13** (extreme right contact in the third row of the grid) in **FIG. 2****.** In another example, position of the simulating component when interacting with a pair of adj acent terminal leads located in the same row of the rectangular grid, with reference numbers **7** and **8,** corresponds to a horizontal position of the simulating component.

Each electromagnetic interaction unit of the first type **211** is linked with a switch which enables switching the communication of such unit between the power supply pole and analog-to-digital converter **202,** with analog-to-digital converter **202** being linked with computing complex **101.**

Each interaction unit of the second type **212** is linked with one of four independent electrical channels, each of which is linked with a switch which enables switching of such channel between the power supply poles.

The electromagnetic coupling of simulating component of the second kind **103** with simulating components of the first kind **102** may be established by means of two electromagnetic interaction units of different types.

Each interaction unit of the first type **211** and interaction unit of the second type **212** are also characterized by a state indicating the presence or absence of coupling between such units and the simulating component. In determining the state of the electromagnetic interaction units of the second type, data on the state and affiliation of the electromagnetic interaction units of the first type, data on the size and mutual arrangement of the simulating components of the first kind, and data on the size of the simulating components of the second kind are used. In order to accurately determine which of the possible units have changed their state, in determining the affiliation of the electromagnetic interaction unit coupled to the simulating component, affiliation of interaction unit of the first type **211** and then of interaction unit of the second type **212** is primarily determined.

Establishing the affiliation of interaction unit of the first type **211** coupled to the simulating component is performed by successive check of each such unit **211** comprising in switching each of switches **213** coupled to interaction units of the first type **211.** Such check assumes that at one point of time only one of possible interaction units **211** is in coupling position with computing complex **101** via switch **213.** If, during the check, a signal is received by ADC **202** that interaction unit **211** being checked at a point of time has changed its state, the affiliation of the coupled unit is considered completed, and computing complex **101** receives data about the sequence number of the coupled unit or its coordinates (row and column) or reference number within the rectangular grid.

In another embodiment, establishing the affiliation of interaction unit of the first type **211** coupled to the simulating component is performed by successive check of the groups of such units **211.** For example, the first half of all units **211** may be simultaneously checked first, followed by the check of the second half. If, during the check of a group of units **211,** a signal is received by ADC **202** that one of the units **211** in the group being checked at a point of time has changed its state, the group is then re-divided into two parts and each of the parts is checked until affiliation of the unit to be coupled is accurately determined.

In order to determine which of the possible vertical or horizontal positions the simulating component occupies, establishing the affiliation of interaction unit of the second type **212** coupled to the simulating component is performed by successive check of the groups of such units **212,** with each of these groups being placed on one channel. Given that there are four possible positions of the simulating component relative to one unit of the first type **211,** units of the second type **212** are arranged on four channels **I to IV,** and each such channel is coupled to power supply **203** via switch **213.** In order to determine the second terminal lead from the pair coupled to the simulating component, each of the channels **I-IV** is sequentially switched changing the state of each of four switches **213.** For example, if the affiliation of the first unit of the first type **211** coupled to the simulating component has been established and its reference number **1** has been determined, the second unit from the possible pair may be adjacent unit **2** located on channel **I** or adjacent block **7** located on channel **III.** For example, if, during the check of a group of units **212,** a signal is received by ADC **202** that one of the units **212** in the group of units **212** located on channel **III** being checked at a point of time has changed its state, the affiliation of unit of the second type **212** is considered completed, and computing complex **101** receives data about the sequence number **7** of the coupled unit **212.**

In one embodiment, each of said switches **213** may be represented by a relay and/or a circuit of semiconductor devices. The switches are controlled by the computing complex. In another embodiment, a more complex circuit of semiconductor devices may be implemented to provide the necessary switching of each of the electromagnetic interaction units.

At step **120,** correlation between each electromagnetically coupled simulating component and a simulated electrical circuit element is established. Determination of the correspondence between simulating component of the second kind **103** and the simulated element of the electrical circuit is performed by obtaining an identifier of such simulating component and comparing such identifier with an identifier in the memory of computing complex **101.** For some simulating components of the second kind **103,** the identifier may be represented by a numerical code stored in the memory device of such component, for others - by an analog signal generated by the electrical circuit of the simulating component; in yet another embodiment - by impedance of the simulating component electrical circuit; in yet another embodiment - by width and frequency of pulses generated by the component electrical circuit. Determination of the correspondence **102** may be conducted according to the referencing principle. The reference identifier value required to determine the correspondence of simulating component of the second kind **103** with the simulated component of the electrical circuit may be stored in the memory device of computing complex **101.**

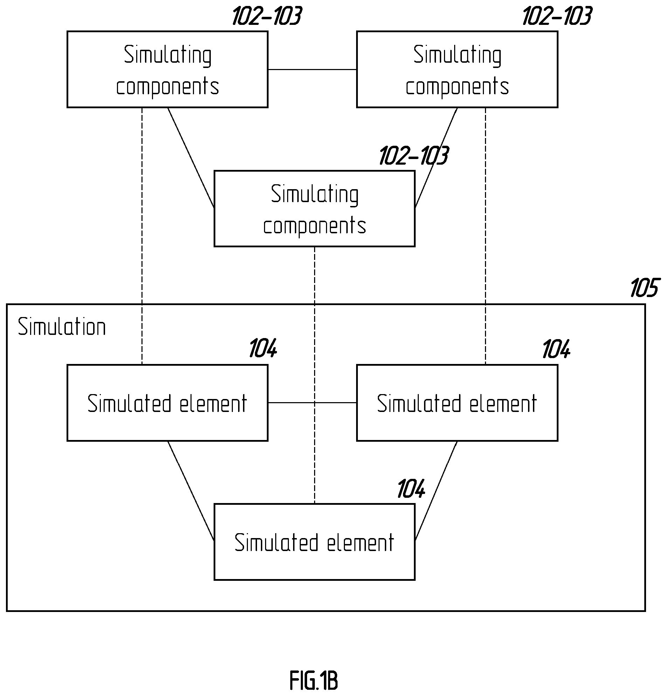

At step **130,** computer simulation is performed for the simulated electrical circuit that consists of the electrical elements that correspond to coupled simulating components and is arranged so that each electromagnetic coupling between simulating components has a corresponding electrical coupling between the simulated electrical circuit elements.
Let us get back to **FIG. 1B** which shows a block diagram of the electrical circuit simulation technique in relation to the hardware and software of the claimed electrical circuit simulation technique. Having established the electromagnetic coupling between the components, obtained data on the state of the electromagnetic interaction units, their affiliation with the simulating components and established a correspondence between the simulating components and simulated elements, computer simulation **105** is performed, the result of which is a computer model that reflects the quantitative and qualitative composition of the simulated electrical circuit. For this purpose, algorithms for calculating electrical circuits, such as an algorithm for calculating values of currents and potentials on the simulated elements of the electrical circuit according to Kirchhoff rules may be stored in computer complex **101.**

For the data about the simulated electrical circuit generated at the terminals of steps **110** and **102,** it may be possible to store them in the memory device of computing complex **101,** for example, in the form of a tabular database. Such database may be automatically created at the start of a session of computing complex **101.** If electromagnetic coupling between one or more of the simulating components and other simulating components is interrupted during the session of computing complex **101,** the data on affiliation and state of the interaction units and identifiers of these components will be deleted from the database. For the components whose electromagnetic coupling has not been interrupted during such session, the data including the affiliation of the electromagnetic interaction units and correspondence of the simulating components will remain in that database, thus eliminating the need to re-assess the affiliation of the interaction units and determine the correspondence of the components. In addition, the simulated electrical circuit is re-simulated each time the simulated electrical circuit is altered when removing or incorporating new simulating components.

State and/or properties can be defined for the simulated components that are used in the computer simulation of the simulated electrical circuit.
At least one simulating component can be fitted with a sensor, and readings from this sensor can also be used in the computer simulation of the simulated electrical circuit.

At least one simulating component of the first kind is configured so as to simulate a microcontroller. In the computer simulation of the simulated circuit containing the microcontroller, computing complex **101** uses data received from the user regarding the electrical potential and internal impedance of the simulated microcontroller pins. Computing complex **101** must support software and/or graphical interface that allows the user to enter data about the electrical potential and internal impedance of the simulated microcontroller pins. In this way, simulation of operation with microcontroller is implemented.

At step **140,** the results of the computer simulation of the simulated circuit are reproduced to the user. Reproduction may be accomplished by means of control of indicating, electric-light, electric-mechanical and other devices that are part of the simulating components. Concurrently, reproduction may be implemented by displaying such results in textual and/or visual form using a computer monitor or other multimedia device.

Reproduction of the results to the user with the use of the computer monitor may be provided with the help of the graphical interface of a client application installed on the user's computer, or a web interface, provided that interaction between the user and the electrical circuit simulation system is provided with the help of the web application. In order to enable various types of electronic interaction, including data exchange over the network, with any external computing means, computing system **101** may have one or more appropriate communication interfaces. Such interfaces may ensure data exchange via wired or wireless data transmission protocols. Examples of communication interfaces are USB, RJ-45 or Wi-Fi interfaces.

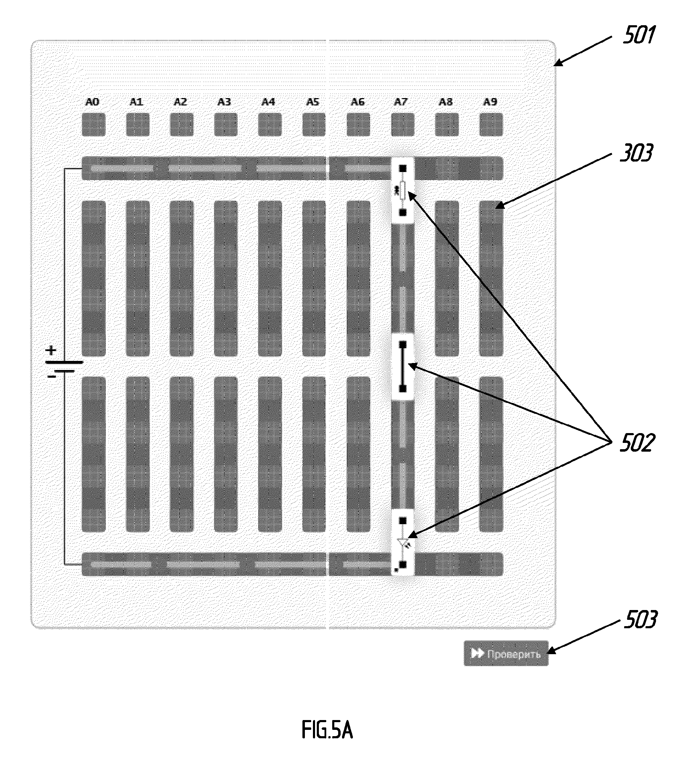

**FIG. 5A** shows a fragment of the graphical user interface used to return data on the simulated electrical circuit to the user. Working area **501** shows the position of identified simulating components **502** on bonding pads **303.** When "Verify" button **503** is pressed, information about the correct assembly of the electrical circuit is returned to the user.

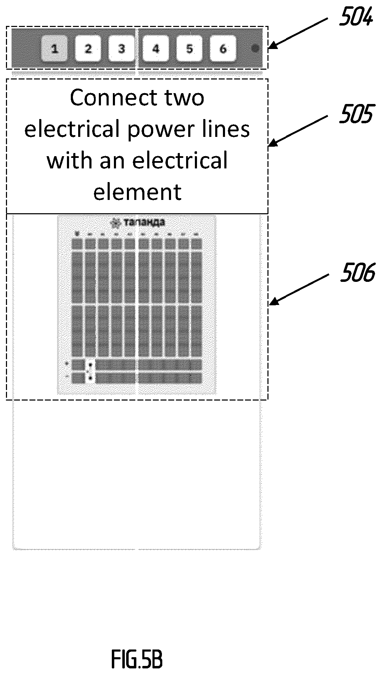

**FIG. 5B** shows a fragment of the graphical user interface used to issue tasks to the user concerning assembly of electrical circuits. Buttons **504** are used to navigate between tasks, field **505** is used to return to the user the wording of the task for electrical circuit assembly, and field **506** is used to return to the user the correct answer to the task.

In this way, when the results of the computer simulation are presented to the user, the users may have a feeling that they are working with a real electrical circuit.

Simulating component of the second kind **103** designed to interact with the claimed electrical circuit simulation system comprises a functional unit, at least one electromagnetic interaction unit coupled with it, and a means of fixation.

In one embodiment, simulating component **103** may be represented by an analog simulating component whose functional unit consists of the electrical circuit comprising at least one resistor and/or capacitor and/or diode and/or induction coil. The above electrical circuit may additionally have a sensor that alters the analog signal generated by such circuit to identify the simulating component, or that alters the electrical impedance of such circuit. Such alternation of the signal or impedance allows determining a sensor reading, and at the same time not preventing the identification of the simulating component. For example, the sensor readings and identifier may be transmitted in different signal frequency components or in different impedance components. Similarly, the above electrical circuit may comprise an active element, such as a LED, which is controlled by changing the voltage on terminals of the simulating component.

In another embodiment, simulating component **103** is represented by a digital simulating component whose functional unit consists of the microcontroller used to manage the data about that component and transmit it to the computing complex of the electrical circuit simulation system. The functional unit of such component may also comprise a sensor and enable reading and transmitting sensor readings to the system computing complex **101.** Similarly, the above functional unit may comprise an active element, such as a LED, and enable receiving data from computing complex **101** of the system for controlling this element.

Simulating component **103** may comprise two electromagnetic interaction units represented by terminal leads. In such case, the signal is transmitted to the computing module of the electrical circuit simulation system by changing the electrical impedance or by changing voltage between its terminal leads. The signal is received by the simulating component by means of changing the voltages at the terminal leads.

The simulating component may also comprise one electromagnetic interaction unit designed so as to enable contactless interaction with the electrical circuit simulation system. For example, such unit may be represented by a PCB coil, which is made in the form of a conductive spiral track on the dielectric plate. When current flows through the PCB coil, electromagnetic field is induced which enables power to be supplied to the simulating component and analog or digital signals to be transmitted to the computing complex.

The functional unit of the simulating component may be additionally represented by the electrical circuit comprising a pulse generator that generates pulses of a given frequency and duration that serve to identify such component.

The means of fixation of the simulating component may be represented by a magnet.

A finished product made using this invention may include a construction kit comprising a breadboard including simulating components of the first kind and simulating components of the second kind aimed at assembling electrical circuits on such breadboard. The user of such construction kit may be a child learning circuit engineering and programming. The functions of the breadboard can be performed by the device shown in **FIG. 3****,** whose front panel has bonding pads arranged in a rectangular grid. The front panel can also be labelled to help guide a child through the assembly of the electrical circuit, e.g. by depicting the power supply indicative poles (plus and minus). Each simulating component of the second kind then included in the construction kit can also be labeled with designations to help a child understand what real element of the circuit it corresponds to. These symbols can be common and standardized symbols for diodes, transistors, resistors and the like. One simulating component of the second kind may occupy a space of two bonding pads when mounted on a breadboard.

For example, a simple LED ignition circuit can be assembled on a breadboard, consisting of the components, such as "LED", "resistor" and "power supply". For the assembled electrical circuit, the current flowing through the LED is automatically calculated, and the LED lights up at the corresponding simulating component with the intensity corresponding to the amperage. In addition, the computer screen shows the electrical circuit that has been assembled, the current flowing in the circuit and the potential difference between the terminals of the resistor and the current source.

If it is assumed that a child is taught through an electronic educational resource, the graphical user interface can also serve to give the pupil tasks for the assembly of the electrical circuit. In addition, the transfer of data about the assembled circuit to the computer enables automatic checking of the assembly, prompting in case of incorrect assembly and issuing a new task. The principle of operation presented in this description allows for applying almost unlimited range of simulating components mounted on the breadboard, which allows the claimed invention to be used in a wide variety of applications.

## Claims

1. An electrical circuit simulation technique which is designed to be performed by a computing complex (101) electrically coupled to at least one simulating component (102, 103) designed to simulate a simulated element (104), wherein the technique includes:
a. providing at least one electromagnetic coupling between at least two simulating components (102, 103), wherein at least one simulating component (102, 103) is electrically coupled to the computing complex (101), and at least one simulating component (102, 103) is supplied with an electric-light or an electric-acoustic device or an electric-mechanical device;
b. establishing correlation between each electromagnetically coupled simulating component (102, 103) and a simulated element (104);
c. computer simulation of the simulated electrical circuit that consists of the simulated elements (104) that correspond to coupled simulating components (102, 103) and is arranged in such a way that each electromagnetic coupling between said simulating components (102, 103) has a corresponding electrical coupling between the simulated elements (104) simulated by said simulating components (102, 103);
d. reproducing the results of the computer simulation of the simulated circuit to a user, wherein said reproduction is accomplished by means of control of the electric-light or the electric-acoustic or the electric-mechanical device of at least one simulating component (102, 103).

2. The technique according to claim 1, wherein each simulating component (102, 103) is represented by a simulating component (102) of the first kind or a simulating component (103) of the second kind, wherein all simulating components (102) of the first kind are electrically coupled to the computing complex (101).

3. The technique according to claim 2, wherein all simulating components (102) of the first kind are represented by sections of one dielectric plate with other parts of such components placed on both sides of the plate, while at least one simulating component (102) of the first kind includes an image of the simulated element (104) placed on the dielectric plate section and an electromagnetic interaction unit used to establish electromagnetic coupling of such simulating component (102) with at least one of the other simulating components (102, 103), each electromagnetic interaction unit being a part of one, two or more simulating components (102) of the first kind, and for the purposes of computer simulation, electromagnetic coupling with such unit is interpreted as electromagnetic coupling with at least one of the many simulating components (102, 103) of which such unit is a part.

4. The technique according to claim 3, wherein at least one electromagnetic interaction unit is configured so as to enable contact or contactless interaction with the simulating component (102, 103), wherein the said unit may be represented by an electrical wire, PCB or wire induction coil.

5. The technique according to claim 3 wherein each electromagnetic interaction unit is **characterized by** its affiliation with at least one simulating component (102, 103) and state indicating the presence or absence of electromagnetic coupling of such unit to the simulating component (103) of the second kind.

6. The technique according to claim 5, in which each electromagnetic interaction unit (211, 212) is represented by an interaction unit (211) of the first type or interaction unit (212) of the second type, while the simulating components (102) of the first kind have such dimensions and mutual arrangement, in which such units of the first and second types appear to be staggered on the dielectric plate, and the electromagnetic coupling between the simulating component (103) of the second kind and the simulating components (102) of the first kind is established by means of two electromagnetic interaction units (211, 212) of different types, and when identifying the state of the electromagnetic interaction units (212) of the second type, data on the state and affiliation of the electromagnetic interaction units (211) of the first type, data on dimensions and mutual arrangement of the simulating components (102) of the first kind, data on dimensions of the simulating components (103) of the second kind are used.

7. The technique according to claim 2, wherein establishing a correspondence between the simulating component (103) of the second kind and the simulated electrical circuit element is implemented by obtaining an identifier of such simulating component (103) and matching such identifier with an identifier in the memory of the computing complex (101), wherein the identifier may be represented by a digital code stored in the memory device of such component or by an analog signal generated by the electrical circuit of such component.

8. The technique according to claim 1, wherein at least one simulating component (102, 103) has a sensor, and readings from this sensor are used in computer simulation of the simulated electrical circuit.

9. The technique according to claim 1, wherein reproduction of the computer simulation results to the user is performed, by displaying such results in textual and/or visual form using a multimedia device.

10. An electrical circuit simulation system for the implementation of the technique according to claim 1, consisting of an electrically interconnected computing complex (101), power supply source and simulating components (102) of the first kind, with each simulating component (102) of the first kind represented by a section of a dielectric plate common for all such components with at least one electromagnetic interaction unit (211, 212) and at least one means of fixation located on such section, where in the electromagnetic interaction units (211, 212) and means of fixation of each simulating component (102) of the first kind are located on the common dielectric plate forming a rectangular grid, and each electromagnetic interaction unit (211, 212) enables an electromagnetic coupling with a simulating component (102, 103) other than a simulating component (102, 103) of which such unit is a part.

11. The system according to claim 10, wherein each electromagnetic interaction unit (211, 212) is represented by an electromagnetic interaction unit (211, 212) of the first type or the second type, and electromagnetic interaction units (211, 212) of the first and second types are staggered on the dielectric plate.

12. The system according to claim 10, wherein each interaction unit (212) of the second type is linked with one of four independent electrical channels (I to IV), each of which is linked with a switch (213) which enables switching of such channel (I to IV) between the power supply poles.

13. The system according to claim 10, wherein the means of fixation of the simulating component (102, 103) is represented by a magnet.

14. The system according to claim 10, wherein at least one simulating component (102) of the first kind is configured so as to simulate a microcontroller, and the computing complex (101) uses data received from the user regarding the electrical potential and internal impedance of the simulated microcontroller pins in the computer simulation of the simulated circuit containing the microcontroller.

15. A simulating component (103) of the second kind configured so as to enable interaction with the electrical circuit simulation system according to claim 10, comprising a functional unit, at least one electromagnetic interaction unit (211, 212) coupled thereto and a means of fixation, wherein the means of fixation may be represented by a magnet, the functional unit may contain a sensor and enable reading and transmitting sensor readings to the system computing complex (101) according to claim 10.

## Patentansprüche

1. Eine elektrische Schaltungssimulationstechnik, welche dazu ausgelegt ist, von einem Rechenkomplex (101) durchgeführt zu werden, welcher elektrisch mit mindestens einer Simulationskomponente (102, 103) gekoppelt ist, welche dazu ausgelegt ist, ein simuliertes Element (104) zu simulieren, wobei die Technik umfasst:
a. Bereitstellen mindestens einer elektromagnetischen Kopplung zwischen mindestens zwei Simulationskomponenten (102, 103), wobei mindestens eine Simulationskomponente (102, 103) mit dem Rechenkomplex (101) elektrisch gekoppelt ist und mindestens eine Simulationskomponente (102, 103) mit einer elektrisch-optischen oder einer elektrischakustischen Vorrichtung oder einer elektrisch-mechanischen Vorrichtung versehen ist;
b. Herstellen einer Korrelation zwischen jeder elektromagnetisch gekoppelten Simulationskomponente (102, 103) und einem simulierten Element (104);
c. Computersimulation der simulierten elektrischen Schaltung, welche aus den simulierten Elementen (104) besteht, welche den gekoppelten Simulationskomponenten (102, 103) entsprechen, und derart angeordnet ist, dass jede elektromagnetische Kopplung zwischen den Simulationskomponenten (102, 103) eine entsprechende elektrische Kopplung zwischen den simulierten Elementen (104) aufweist, die durch die Simulationskomponenten (102, 103) simuliert werden;
d. Wiedergeben der Ergebnisse der Computersimulation der simulierten Schaltung für einen Benutzer, wobei die Wiedergabe durch Steuern der elektrisch-optischen oder der elektrischakustischen oder der elektrisch-mechanischen Vorrichtung mindestens einer Simulationskomponente (102, 103) erfolgt.

2. Das Verfahren nach Anspruch 1, wobei jede Simulationskomponente (102, 103) durch eine Simulationskomponente (102) der ersten Art oder eine Simulationskomponente (103) der zweiten Art dargestellt wird, wobei alle Simulationskomponenten (102) der ersten Art mit dem Rechenkomplex (101) elektrisch gekoppelt sind.

3. Das Verfahren gemäß Anspruch 2, wobei alle Simulationskomponenten (102) der ersten Art durch Abschnitte einer dielektrischen Platte dargestellt werden, wobei andere Teile derartiger Komponenten auf beiden Seiten der Platte angeordnet sind, während mindestens eine Simulationskomponente (102) der ersten Art ein Bild des simulierten Elements (104), welches auf dem Abschnitt der dielektrischen Platte angeordnet ist, und eine elektromagnetische Wechselwirkungseinheit umfasst, die dazu dient, eine elektromagnetische Kopplung dieser Simulationskomponente (102) mit mindestens einer der anderen Simulationskomponenten (102, 103) herzustellen, wobei jede elektromagnetische Interaktionseinheit Teil einer, zweier oder mehrerer Simulationskomponenten (102) der ersten Art ist und für die Zwecke der Computersimulation die elektromagnetische Kopplung mit einer derartigen Einheit als elektromagnetische Kopplung mit mindestens einer der mehreren Simulationskomponenten (102, 103) interpretiert wird, zu denen eine derartige Einheit gehört.

4. Das Verfahren nach Anspruch 3, wobei mindestens eine elektromagnetische Interaktionseinheit derart konfiguriert ist, dass sie eine kontaktbehaftete oder kontaktlose Interaktion mit der Simulationskomponente (102, 103) ermöglicht, wobei die genannte Einheit durch einen elektrischen Draht, eine Leiterplatte oder eine Drahtinduktionsspule dargestellt werden kann.

5. Das Verfahren gemäß Anspruch 3, wobei jede elektromagnetische Interaktionseinheit durch ihre Zugehörigkeit zu mindestens einer Simulationskomponente (102, 103) und einen Zustand gekennzeichnet ist, welcher das Vorhandensein oder Fehlen einer elektromagnetischen Kopplung einer derartigen Einheit mit der Simulationskomponente (103) der zweiten Art anzeigt.

6. Das Verfahren gemäß Anspruch 5, bei dem jede elektromagnetische Interaktionseinheit (211, 212) durch eine Interaktionseinheit (211) des ersten Typs oder eine Interaktionseinheit (212) des zweiten Typs dargestellt wird, während die Simulationskomponenten (102) der ersten Art derartige Abmessungen und eine derartig gegenseitige Anordnung aufweisen, dass derartige Einheiten des ersten und zweiten Typs auf der dielektrischen Platte versetzt angeordnet zu sein scheinen, und die elektromagnetische Kopplung zwischen der Simulationskomponente (103) der zweiten Art und den Simulationskomponenten (102) der ersten Art mittels zweier elektromagnetischer Interaktionseinheiten (211, 212) unterschiedlicher Art hergestellt wird, und bei der Identifizierung des Zustands der elektromagnetischen Interaktionseinheiten (212) der zweiten Art werden Daten über den Zustand und die Zugehörigkeit der elektromagnetischen Interaktionseinheiten (211) des ersten Typs, Daten über die Abmessungen und die gegenseitige Anordnung der Simulationskomponenten (102) des ersten Typs sowie Daten über die Abmessungen der Simulationskomponenten (103) des zweiten Typs verwendet.

7. Das Verfahren gemäß Anspruch 2, wobei das Herstellen einer Entsprechung zwischen der Simulationskomponente (103) der zweiten Art und dem simulierten elektrischen Schaltungselement dadurch implementiert wird, dass ein Identifikator dieser Simulationskomponente (103) ermittelt und ein derartiger Identifikator mit einem Identifikator im Speicher des Rechenkomplexes (101) erfolgt, wobei die Kennung durch einen in der Speichervorrichtung dieser Komponente gespeicherten digitalen Code oder durch ein von der elektrischen Schaltung dieser Komponente erzeugtes analoges Signal dargestellt werden kann.

8. Das Verfahren nach Anspruch 1, wobei mindestens eine Simulationskomponente (102, 103) über einen Sensor verfügt und die Messwerte dieses Sensors in der Computersimulation des simulierten elektrischen Schaltkreises verwendet werden.

9. Das Verfahren nach Anspruch 1, wobei die Wiedergabe der Ergebnisse der Computersimulation für den Benutzer durch Anzeige dieser Ergebnisse in textueller und/oder visueller Form unter Verwendung eines Multimedia-Geräts erfolgt.

10. Ein elektrisches Schaltungssimulationssystem zur Umsetzung des Verfahrens gemäß Anspruch 1, bestehend aus einem elektrisch miteinander verbundenen Rechenkomplex (101), einer Stromversorgungsquelle und Simulationskomponenten (102) der ersten Art, wobei jede Simulationskomponente (102) der ersten Art durch einen Abschnitt einer für alle diese Komponenten gemeinsamen dielektrischen Platte mit mindestens einer elektromagnetischen Interaktionseinheit (211, 212) und mindestens einem auf diesem Abschnitt angeordneten Befestigungsmittel dargestellt wird, wobei sich die elektromagnetischen Interaktionseinheiten (211, 212) und die Befestigungsmittel jeder Simulationskomponente (102) der ersten Art auf der gemeinsamen dielektrischen Platte angeordnet sind, die ein rechteckiges Gitter bildet, und jede elektromagnetische Interaktionseinheit (211, 212) eine elektromagnetische Kopplung mit einer anderen Simulationskomponente (102, 103) als der Simulationskomponente (102, 103) ermöglicht, zu der diese Einheit gehört.

11. Das System gemäß Anspruch 10, wobei jede elektromagnetische Interaktionseinheit (211, 212) durch eine elektromagnetische Interaktionseinheit (211, 212) des ersten Typs oder des zweiten Typs dargestellt wird und elektromagnetische Interaktionseinheiten (211, 212) des ersten und zweiten Typs auf der dielektrischen Platte versetzt angeordnet sind.

12. Das System gemäß Anspruch 10, wobei jede Interaktionseinheit (212) des zweiten Typs mit einem von vier unabhängigen elektrischen Kanälen (I bis IV) verbunden ist, von denen jeder mit einem Schalter (213) verbunden ist, welcher das Umschalten eines derartigen Kanals (I bis IV) zwischen den Polen der Stromversorgung ermöglicht.

13. Das System nach Anspruch 10, wobei das Befestigungsmittel der Simulationskomponente (102, 103) durch einen Magneten dargestellt wird.

14. Das System gemäß Anspruch 10, wobei mindestens eine Simulationskomponente (102) der ersten Art derart konfiguriert ist, dass sie einen Mikrocontroller simuliert, und der Rechenkomplex (101) Daten verwendet, welche er vom Benutzer bezüglich des elektrischen Potentials und der internen Impedanz der simulierten Mikrocontroller-Pins in der Computersimulation der simulierten Schaltung, welche den Mikrocontroller enthält, empfangen hat.

15. Eine Simulationskomponente (103) der zweiten Art, welche derart konfiguriert ist, dass sie eine Interaktion mit dem elektrischen Schaltungssimulationssystem gemäß Anspruch 10 ermöglicht, umfassend eine Funktionseinheit, mindestens eine damit gekoppelte elektromagnetische Interaktionseinheit (211, 212) und ein Befestigungsmittel, wobei das Befestigungsmittel durch einen Magneten dargestellt werden kann, die Funktionseinheit einen Sensor enthalten kann und das Lesen und Übertragen von Sensorwerten an den Systemrechnerkomplex (101) gemäß Anspruch 10 ermöglicht.

## Revendications

1. Une technique de simulation de circuit électrique conçue pour être mise en œuvre par un complexe informatique (101) couplé électriquement à au moins un composant de simulation (102, 103) conçu pour simuler un élément simulé (104), dans laquelle la technique comprend :
a. fournir au moins un couplage électromagnétique entre au moins deux composants de simulation (102, 103), dans laquelle au moins un composant de simulation (102, 103) est couplé électriquement au complexe informatique (101), et au moins un composant de simulation (102, 103) est alimenté par un dispositif électrique-lumineux ou un dispositif électrique-acoustique ou un dispositif électrique-mécanique ;
b. établir une corrélation entre chaque composant de simulation couplé électromagnétiquement (102, 103) et un élément simulé (104) ;
c. simulation informatique du circuit électrique simulé qui se compose des éléments simulés (104) correspondant aux composants de simulation couplés (102, 103) et qui est agencé de telle manière que chaque couplage électromagnétique entre lesdits composants de simulation (102, 103) ait un couplage électrique correspondant entre les éléments simulés (104) simulés par lesdits composants de simulation (102, 103) ;
d. reproduction des résultats de la simulation informatique du circuit simulé pour un utilisateur, ladite reproduction étant réalisée au moyen du contrôle du dispositif électrique-lumineux ou du dispositif électrique-acoustique ou du dispositif électrique-mécanique d'au moins un composant de simulation (102, 103).

2. La technique selon la revendication 1, dans laquelle chaque composant de simulation (102, 103) est représenté par un composant de simulation (102) du premier type ou un composant de simulation (103) du deuxième type, dans laquelle tous les composants de simulation (102) du premier type sont couplés électriquement au complexe informatique (101).

3. La technique selon la revendication 2, dans laquelle tous les composants de simulation (102) du premier type sont représentés par des sections d'une plaque diélectrique, les autres parties de ces composants étant placées des deux côtés de la plaque, tandis qu'au moins un composant de simulation (102) du premier type comprend une image de l'élément simulé (104) placée sur la section de plaque diélectrique et une unité d'interaction électromagnétique utilisée pour établir un couplage électromagnétique de ce composant de simulation (102) avec au moins l'un des autres composants de simulation (102, 103), chaque unité d'interaction électromagnétique faisant partie d'un, deux ou plusieurs composants de simulation (102) du premier type, et aux fins de la simulation informatique, le couplage électromagnétique avec une telle unité est interprété comme un couplage électromagnétique avec au moins l'un des nombreux composants de simulation (102, 103) dont cette unité fait partie.

4. La technique selon la revendication 3, dans laquelle au moins une unité d'interaction électromagnétique est configurée de manière à permettre une interaction avec ou sans contact avec le composant de simulation (102, 103), ladite unité pouvant être représentée par un fil électrique, un circuit imprimé ou une bobine d'induction à fil.

5. La technique selon la revendication 3, dans laquelle chaque unité d'interaction électromagnétique est **caractérisée par** son affiliation à au moins un composant de simulation (102, 103) et par un état indiquant la présence ou l'absence de couplage électromagnétique de cette unité au composant de simulation (103) du deuxième type.

6. La technique selon la revendication 5, dans laquelle chaque unité d'interaction électromagnétique (211, 212) est représentée par une unité d'interaction (211) du premier type ou une unité d'interaction (212) du deuxième type, tandis que les composants de simulation (102) du premier type ont des dimensions et une disposition mutuelle telles que ces unités du premier et du deuxième type semblent être décalées sur la plaque diélectrique, et le couplage électromagnétique entre le composant de simulation (103) du deuxième type et les composants de simulation (102) du premier type est établi au moyen de deux unités d'interaction électromagnétique (211, 212) de types différents, et lors de l'identification de l'état des unités d'interaction électromagnétique (212) du deuxième type, les données sur l'état et l'affiliation des unités d'interaction électromagnétique (211) du premier type, les données sur les dimensions et la disposition mutuelle des composants de simulation (102) du premier type, les données sur les dimensions des composants de simulation (103) du deuxième type sont utilisées.

7. La technique selon la revendication 2, dans laquelle l'établissement d'une correspondance entre le composant de simulation (103) du deuxième type et l'élément de circuit électrique simulé est mis en œuvre en obtenant un identifiant dudit composant de simulation (103) et en faisant correspondre ledit identifiant avec un identifiant dans la mémoire du complexe informatique (101), dans laquelle l'identifiant peut être représenté par un code numérique stocké dans le dispositif de mémoire dudit composant ou par un signal analogique généré par le circuit électrique dudit composant.

8. La technique selon la revendication 1, dans laquelle au moins un composant de simulation (102, 103) comporte un capteur, et les mesures provenant de ce capteur sont utilisées dans la simulation informatique du circuit électrique simulé.

9. La technique selon la revendication 1, dans laquelle la reproduction des résultats de la simulation informatique pour l'utilisateur est effectuée en affichant ces résultats sous forme textuelle et/ou visuelle à l'aide d'un dispositif multimédia.

10. Un système de simulation de circuits électriques pour la mise en œuvre de la technique selon la revendication 1, composé d'un complexe informatique interconnecté électriquement (101), d'une une source d'alimentation électrique et des composants de simulation (102) du premier type, chaque composant de simulation (102) du premier type étant représenté par une section d'une plaque diélectrique commune à tous ces composants avec au moins une unité d'interaction électromagnétique (211, 212) et au moins un moyen de fixation situé sur cette section, où dans les unités d'interaction électromagnétique (211, 212) et les moyens de fixation de chaque composant de simulation (102) du premier type sont situés sur la plaque diélectrique commune formant une grille rectangulaire, et chaque unité d'interaction électromagnétique (211, 212) permet un couplage électromagnétique avec un composant de simulation (102, 103) autre que le composant de simulation (102, 103) dont cette unité fait partie.

11. Le système selon la revendication 10, dans lequel chaque unité d'interaction électromagnétique (211, 212) est représentée par une unité d'interaction électromagnétique (211, 212) du premier type ou du deuxième type, et les unités d'interaction électromagnétique (211, 212) des premier et deuxième types sont décalées sur la plaque diélectrique.

12. Le système selon la revendication 10, dans lequel chaque unité d'interaction (212) du deuxième type est reliée à l'un des quatre canaux électriques indépendants (I à IV), chacun d'entre eux étant relié à un commutateur (213) qui permet de commuter ce canal (I à IV) entre les pôles d'alimentation électrique.

13. Le système selon la revendication 10, dans lequel le moyen de fixation du composant de simulation (102, 103) est représenté par un aimant.

14. Le système selon la revendication 10, dans lequel au moins un composant de simulation (102) du premier type est configuré de manière à simuler un microcontrôleur, et le complexe informatique (101) utilise les données reçues de l'utilisateur concernant le potentiel électrique et l'impédance interne des broches du microcontrôleur simulé dans la simulation informatique du circuit simulé contenant le microcontrôleur.

15. Un composant de simulation (103) du deuxième type configuré de manière à permettre une interaction avec le système de simulation de circuits électriques selon la revendication 10, comprenant une unité fonctionnelle, au moins une unité d'interaction électromagnétique (211, 212) couplée à celle-ci et un moyen de fixation, dans lequel le moyen de fixation peut être représenté par un aimant, l'unité fonctionnelle peut contenir un capteur et permettre la lecture et la transmission des lectures du capteur au complexe informatique du système (101) selon la revendication 10.
